# FASCICULE DE BREVET EUROPEEN

(11) **EP 4 081 410 B1**
(45) Date de publication et mention de la délivrance du brevet: **27.05.2026**
(21) Numéro de dépôt: 20845406.6
(22) Date de dépôt: 14.12.2020
(51) Int. Cl.: B60C 1/00, C08L 7/00

(54) **NOUVELLE COMPOSITION DE CAOUTCHOUC POUR PNEUMATIQUE**
NEUARTIGE KAUTSCHUKZUSAMMENSETZUNG FÜR EINEN REIFEN
NOVEL RUBBER COMPOSITION FOR A TYRE

(30) Priorité: 24.12.2019 FR 1915539
(43) Date de publication de la demande: 02.11.2022
(73) Titulaire: COMPAGNIE GENERALE DES ETABLISSEMENTS MICHELIN, 63000 Clermont-Ferrand (FR)
(72) Inventeur: CROCHET, Aurore, 63040 CLERMONT-FERRAND Cedex 9 (FR); PIBRE, Guillaume, 63040 CLERMONT-FERRAND Cedex 9 (FR)
(74) Mandataire: M.F.P. Michelin
(86) Numéro de dépôt international: PCT/FR2020/052409
(87) Numéro de publication internationale: WO 2021/130426

(56) Documents cités:
- WO-A1-2017/111019

## Description

La présente invention est relative aux compositions de caoutchouc destinées notamment à la fabrication de pneumatiques ou de produits semi-finis pour pneumatiques, en particulier des compositions de caoutchouc constituant une couche interne d'un pneumatique, notamment située dans la zone du bourrelet du pneumatique.

La réduction des émissions de gaz à effet de serre des transports est un des défis majeurs auquel les manufacturiers de pneumatiques sont confrontés. Le pneumatique constitue une source importante de progrès, par le biais d'un abaissement de la résistance au roulement, car celle-ci a un impact direct sur la consommation de carburant des véhicules.

Compte tenu de la conscience écologique toujours grandissante des consommateurs, il est nécessaire de poursuivre les efforts visant à réduire la résistance au roulement des pneumatiques.

Les pneumatiques comportent habituellement :
- Deux bourrelets destinés à entrer en contact avec une jante de montage, chaque bourrelet comportant au moins une structure annulaire de renforcement dite « tringle » ainsi qu'un bourrage, le bourrage étant situé radialement à l'extérieur de la structure annulaire de renforcement et est constitué de compositions de caoutchouc ;
- Deux flancs prolongeant les bourrelets radialement vers l'extérieur et s'unissant dans un sommet comprenant une bande de roulement ;
- Au moins une armature de carcasse s'étendant depuis les bourrelets à travers les flancs jusqu'au sommet, et comportant une pluralité d'éléments de renforcement de carcasse.

L'ensemble formé par le bourrelet et la partie radialement intérieur du flanc d'un pneumatique fait partie des composantes du pneumatique dont la structure a une répercussion sur la résistance au roulement du pneumatique.

Le rôle du bourrelet est multiple : il reprend les tensions de l'armature de carcasse et transmet les efforts subis par le pneumatique du flanc vers la jante. Il assure donc le guidage du sommet du pneumatique à partir de la jante. Pour assurer ces fonctions, la zone du bourrelet est généralement constituée de compositions de caoutchouc ayant une rigidité élevée. Ces compositions de caoutchouc formant la zone du bourrelet doivent également contribuer à réduire la résistance au roulement du pneumatique, donc doivent présenter une hystérèse faible.

Il existe donc un besoin de disposer de compositions de caoutchouc qui présentent une rigidité élevée et une hystérèse faible.

Pour obtenir des compositions de caoutchouc présentant une rigidité élevée, il a été proposé d'introduire dans ces compositions de caoutchouc de fortes quantités de charges renforçantes. Toutefois, cette solution pénalise l'hystérèse impactant négativement la résistance au roulement.

Une autre solution pour augmenter la rigidité d'une composition de caoutchouc consiste à combiner des charges renforçantes avec des résines durcissables telles que des résines phénoplastes. Toutefois, cette solution entraine également une augmentation de l'hystérèse. De plus, l'utilisation de telles résines est un désavantage du point de vue de l'hygiène et de l'environnement car lors de la réticulation des compositions de caoutchouc, ces résines libèrent du formaldéhyde.

Diminuer l'hystérèse de compositions de caoutchouc, tout en conservant une rigidité élevée, sans augmenter le taux de charges renforçantes, demeure donc encore une vraie difficulté technique pour les manufacturiers de pneumatiques.

Poursuivant ses recherches, la demanderesse a trouvé, de manière surprenante, que l'utilisation d'un mélange de polyoléfines spécifiques dans une composition de caoutchouc permettait de remplacer tout ou partie de la charge renforçante et d'obtenir une diminution significative de l'hystérèse tout en améliorant la rigidité de ladite composition de caoutchouc.

Ainsi, l'invention concerne une composition de caoutchouc à base d'une matrice élastomérique comprenant majoritairement au moins un élastomère diénique, d'un polyéthylène non-fonctionnalisé et non-réticulé, d'un polyéthylène fonctionnalisé et non-réticulé, d'une charge renforçante dont le taux est compris dans un domaine allant de 0 à 15 pce et d'un système de réticulation, le polyéthylène fonctionnalisé et non-réticulé comportant au moins un groupe fonctionnel comprenant au moins un hétéroatome choisi dans le groupe constitué par Si, N, O, S et Cl, le taux de polyéthylène non-fonctionnalisé et non-réticulé exprimé en pce étant supérieur au taux du polyéthylène fonctionnalisé et non-réticulé exprimé en pce.

Plus particulièrement, la composition de caoutchouc selon l'invention peut présenter avantageusement au moins l'une des caractéristiques préférées suivantes prises seules ou en combinaisons.

Préférentiellement, l'élastomère diénique est un élastomère diénique essentiellement insaturé, c'est-à-dire ayant un taux de motifs diéniques supérieur à 15 % en mol

Préférentiellement, l'élastomère diénique est un élastomère isoprénique.

Préférentiellement, le polyéthylène non-fonctionnalisé et non-réticulé est choisi dans le groupe constitué par les polyéthylènes haute densité, les polyéthylènes basse densité, les polyéthylènes basses densité linéaire, les polyéthylènes moyenne densité, les polyéthylènes de masse moléculaire très élevée, les polyéthylènes de très basse densité et les mélanges de ces polyéthylènes ; étant entendu que ces polyéthylènes sont non-fonctionnalisés et non réticulés.

Préférentiellement, le polyéthylène non-fonctionnalisé et non-réticulé est un polyéthylène haute densité non-fonctionnalisé et non-réticulé.

Préférentiellement, le polyéthylène non-fonctionnalisé et non-réticulé a une densité comprise dans un domaine allant de 940 à 970 kg/m³, plus préférentiellement dans un domaine allant de 950 à 970 kg/m³.

Préférentiellement, le polyéthylène non-fonctionnalisé et non-réticulé a un indice de fluidité à 190°C sous 5 kg compris dans un domaine allant de 2 à 25 g/10 min, de préférence compris dans un domaine allant de 10 à 25 g/10 min.

Préférentiellement, le polyéthylène fonctionnalisé et non-réticulé comprend au moins un groupe fonctionnel alcoxysilane.

Préférentiellement, le polyéthylène fonctionnalisé et non-réticulé est choisi dans le groupe constitué par les polyéthylènes haute densité, les polyéthylènes basse densité, les polyéthylènes basse densité linéaire, les polyéthylènes moyenne densité, les polyéthylènes de masse moléculaire très élevée, les polyéthylènes de très basse densité et les mélanges de ces polyéthylènes ; étant entendu que ces polyéthylène sont fonctionnalisés, de préférence fonctionnalisés alcoxysilane, et non-réticulés.

Préférentiellement, le polyéthylène fonctionnalisé et non-réticulé, notamment le polyéthylène fonctionnalisé alcoxysilane et non-réticulé, a une densité comprise dans un domaine allant de 940 à 970 kg/m³, plus préférentiellement dans un domaine allant de 940 à 960 kg/m³.

Préférentiellement, le polyéthylène fonctionnalisé et non-réticulé, le polyéthylène fonctionnalisé alcoxysilane et non-réticulé, a un indice de fluidité à 190°C sous 5 kg compris dans un domaine allant de 2 à 25 g/10 min, de préférence compris dans un domaine allant de 2 à 10 g/10 min.

Préférentiellement, le taux de polyéthylène non-fonctionnalisé et non-réticulé exprimé en pce est supérieur au taux du polyéthylène fonctionnalisé alcoxysilane et non-réticulé exprimé en pce.

Préférentiellement, le ratio massique entre le polyéthylène non-fonctionnalisé et non-réticulé et le polyéthylène fonctionnalisé et non-réticulé, notamment le polyéthylène fonctionnalisé alcoxysilane et non-réticulé, est compris dans un domaine allant de 2 à 20 ; de préférence dans un domaine allant de 5 à 10.

Préférentiellement, le taux de polyéthylène non-fonctionnalisé et non-réticulé est compris dans un domaine allant de 5 à 70 pce, de préférence allant de 10 à 45 pce.

Préférentiellement, le taux de polyéthylène fonctionnalisé et non-réticulé, notamment de polyéthylène fonctionnalisé alcoxysilane et non-réticulé, est compris dans un domaine allant de 0,5 à 15 pce, de préférence allant de 1 à 10 pce.

Préférentiellement, le taux total de polyéthylène non-fonctionnalisé et non-réticulé et de polyéthylène fonctionnalisé et non-réticulé, notamment de polyéthylène fonctionnalisé alcoxysilane et non-réticulé, est supérieur ou égal à 5,5 pce, de préférence est compris dans un domaine allant de 5,5 à 75 pce.

Préférentiellement, la composition de caoutchouc comprend optionnellement une charge renforçante.

Préférentiellement, le taux de la charge renforçante est compris dans un domaine allant de 0 à 13 pce, de préférence de 0 à 12 pce.

Préférentiellement, la charge renforçante est choisie dans le groupe constitué par le noir de carbone, la silice et leur mélange.

Préférentiellement, le taux d'élastomère diénique est compris dans un domaine allant de 52 pce à 100 pce.

Un autre objet de la présente invention est un pneumatique comportant au moins une couche comprenant au moins une composition de caoutchouc définie ci-dessus.

Préférentiellement, dans le pneumatique, la composition constitue une couche interne de ce pneumatique.

Plus préférentiellement, la couche se situe dans la zone du bourrelet du pneumatique. Méthodes de mesure utilisées

### Propriétés dynamiques :

Les propriétés dynamiques et notamment tan(δ)max, représentative de l'hystérèse, sont mesurées sur un viscoanalyseur (Metravib VA4000), selon la norme ASTM D 5992-96. On enregistre la réponse d'un échantillon de la composition vulcanisée (éprouvettes cylindriques de 2 mm d'épaisseur et de 10 mm de diamètre), soumis à une sollicitation sinusoïdale en cisaillement simple alterné, à la fréquence de 10Hz, à une température de 60°C. On effectue un balayage en amplitude de déformation de 0,1% à 100% crête-crête (cycle aller), puis de 100% à 0,1% crête-crête (cycle retour). Les résultats exploités sont le module complexe de cisaillement dynamique (G*) et le facteur de perte tan(δ). Pour le cycle retour, on indique la valeur maximale de tan(δ) observée, noté tan(δ)_{max à 60°C} ; ainsi que le module G* à 50% de déformation noté G*_{50% retour à 60°C}.

Pour plus de visibilité, les résultats seront indiqués en base 100 ; la valeur 100 étant attribuée au témoin. Un résultat inférieur à 100 indique une diminution de la valeur de tan(δ)ₘₐₓ, donc de l'hystérèse (donc une amélioration de la résistance au roulement), et inversement, un résultat supérieur à 100, indiquera une augmentation de la valeur de tan(δ)max, donc de l'hystérèse (donc une dégradation de la résistance au roulement).

Les résultats de G* sont également exprimés en base 100, la valeur 100 étant attribuée au témoin. Un résultat inférieur à 100 indiquant une diminution des propriétés de rigidité, et inversement, un résultat supérieur à 100, indiquera une augmentation des propriétés de rigidité.

### Description détaillée

Un objet de la présente invention concerne une composition de caoutchouc à base d'une matrice élastomérique comprenant majoritairement au moins un élastomère diénique, d'un polyéthylène non-fonctionnalisé et non-réticulé, d'un polyéthylène fonctionnalisé et non-réticulé, d'une charge renforçante dont le taux est compris dans un domaine allant de 0 à 15 pce et d'un système de réticulation, le polyéthylène fonctionnalisé et non-réticulé comportant au moins un groupe fonctionnel comprenant au moins un hétéroatome choisi dans le groupe constitué par Si, N, O, S et Cl, le taux de polyéthylène non-fonctionnalisé et non-réticulé exprimé en pce étant supérieur au taux du polyéthylène fonctionnalisé et non-réticulé exprimé en pce.

Par l'expression « composition à base de », il faut entendre une composition comportant le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression « partie en poids pour cent parties en poids d'élastomère » (ou pce), il faut entendre au sens de la présente invention, la partie, en masse pour cent parties en masse d'élastomère.

L'expression « consiste essentiellement en » suivie d'une ou plusieurs caractéristiques, signifie que peuvent être inclus dans le procédé ou le matériau de l'invention, outre les composants ou étapes explicitement énumérés, des composants ou des étapes qui ne modifient pas significativement les propriétés et les caractéristiques de l'invention.

Dans la présente, sauf indication expresse différente, tous les pourcentages (%) indiqués sont des pourcentages (%) en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. De préférence par majoritaire, on entend présent à plus de 52%, de préférence plus de 60%, 70%, 80%, 90%, et plus préférentiellement le composé « majoritaire » représente 100%.

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

La composition de caoutchouc est à base d'une matrice élastomérique comprenant majoritairement au moins un élastomère diénique.

Par « matrice élastomérique », on entend au sens de la présente invention l'ensemble des élastomères formant la composition de caoutchouc.

Par élastomère (ou indistinctement caoutchouc) « diénique », qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : « essentiellement insaturés » ou « essentiellement saturés ». On entend en général par « essentiellement insaturé », un élastomère diénique issu au moins en partie de monomères diènes conjugués, ayant un taux de motifs ou unités d'origine diénique (diènes conjugués) qui est supérieur à 15 % (% en mol) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques « essentiellement saturés » (taux de motifs d'origine diénique faible ou très faible, toujours inférieur à 15 % en mol).

Préférentiellement, l'élastomère diénique utilisable dans la composition de l'invention est un élastomère diénique essentiellement insaturé, c'est-à-dire présentant un taux de motifs diéniques supérieur à 15 % en mol.

On entend particulièrement par élastomère diénique susceptible d'être utilisé dans les compositions conformes à l'invention :
- tout homopolymère d'un monomère diène, conjugué ou non, ayant de 4 à 18 atomes de carbone ;
- tout copolymère d'un diène, conjugué ou non, ayant de 4 à 18 atomes de carbone et d'au moins un autre monomère. L'autre monomère peut être une oléfine ou un diène conjugué.

A titre de diènes conjugués conviennent les diènes conjugués ayant de 4 à 12 atomes de carbone, en particulier les 1,3-diènes, tels que notamment le 1,3-butadiène et l'isoprène.

A titre de diènes non conjugués conviennent les diènes non conjugués ayant de 6 à 12 atomes de carbone, tels que le 1,4-hexadiène, l'éthylidène norbornène, le dicyclopentadiène.

A titre d'oléfines conviennent les composés vinylaromatiques ayant de 8 à 20 atomes de carbone et les α-monooléfines aliphatiques, notamment acycliques, ayant de 2 à 12 atomes de carbone.

A titre de composés vinylaromatiques conviennent par exemple le styrène, l'ortho-, méta-, para-méthylstyrène, le mélange commercial "vinyle-toluène", le para-tertiobutylstyrène.

Plus particulièrement, l'élastomère diénique peut être :
- tout homopolymère d'un monomère diène conjugué, notamment tout homopolymère obtenu par polymérisation d'un monomère diène conjugué ayant de 4 à 12 atomes de carbone;
- tout copolymère obtenu par copolymérisation d'un ou plusieurs diènes conjugués entre eux ou avec un ou plusieurs composés vinylaromatiques ayant de 8 à 20 atomes de carbone;
- tout copolymère obtenu par copolymérisation d'un ou plusieurs diènes, conjugués ou non, avec une α-monooléfine ou leur mélange.

Préférentiellement, l'élastomère diénique est choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères. Les copolymères de butadiène sont particulièrement choisis dans le groupe constitué par les copolymères de butadiène-styrène (SBR).

Plus préférentiellement encore, l'élastomère diénique est un élastomère isoprénique.

Par « élastomère isoprénique », on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR).

Cet élastomère isoprénique peut être de préférence du caoutchouc naturel ou un polyisoprène de synthèse. Parmi ces polyisoprènes de synthèse, sont utilisés de préférence des polyisoprènes ayant un taux (% molaire) de liaisons cis-1,4 supérieur à 90 %, plus préférentiellement encore supérieur à 98 %.

L'élastomère diénique peut être modifié, c'est à dire soit couplé et/ou étoilé, soit fonctionnalisé, soit couplé et/ou étoilé et simultanément fonctionnalisé. Ainsi, l'élastomère diénique peut être couplé et/ou étoilé, par exemple au moyen d'un atome silicium ou d'étain qui lie entre elles les chaînes élastomères.

L'élastomère diénique peut être simultanément ou alternativement fonctionnalisé et comprendre au moins groupe fonctionnel. Par groupe fonctionnel, on entend un groupe comprenant au moins un hétéroatome choisi parmi Si, N, S, O et P.

La composition selon l'invention peut contenir un seul élastomère diénique ou un mélange de plusieurs élastomères diéniques, le ou les élastomères diéniques pouvant être utilisés en association avec tout type d'élastomère synthétique autre que diénique. Préférentiellement, dans ce mode de réalisation, l'élastomère majoritaire est un élastomère isoprénique.

Préférentiellement, le taux d'élastomère diénique, préférentiellement d'élastomère isoprénique est compris dans un domaine allant de 52 pce à 100 pce, plus préférentiellement encore dans un domaine allant de 55 pce à 100 pce, plus préférentiellement encore dans un domaine allant de 80 à 100 pce. Plus préférentiellement encore, le taux d'élastomère diénique, préférentiellement d'élastomère isoprénique, dans la composition de caoutchouc est de 100 pce.

La composition de caoutchouc comprend au moins un polyéthylène non-fonctionnalisé et non-réticulé et au moins un polyéthylène fonctionnalisé et non-réticulé.

De manière surprenante, la demanderesse a trouvé qu'il était possible de remplacer tout ou partie des charges renforçantes utilisées classiquement dans les compositions de caoutchouc notamment destinées à la fabrication de pneumatique par un mélange de polyéthylène non-fonctionnalisé et non-réticulé et de polyéthylène fonctionnalisé et non-réticulé. Ce mélange de deux polyéthylènes non-réticulés, dont l'un fonctionnalisé et l'autre pas, permet d'obtenir des compositions de caoutchouc qui présentent une hystérèse significativement améliorée tout en conservant une excellente rigidité, voire même en améliorant la rigidité de ces compositions.

Le polyéthylène (aussi appelé « PE ») est une polyoléfine semi-cristalline appartenant à la famille des polymères thermoplastiques.

Dans le cadre de la présente invention, le terme « polyéthylène » désigne les homopolymères d'éthylène, c'est-à-dire des polymères obtenus à partir de l'éthylène comme seul monomère. Toutefois, il n'est pas exclu que des monomères de propylène, de butène-1, d'hexène-1 ou d'octène-1 soient présents dans le polymère. Cependant, si ces monomères sont présents, ils le sont à titre d'impureté et en faible proportions par rapport au monomère d'éthylène. Les copolymères d'éthylène et de propylène (aussi appelé EP, EPM ou EPR pour « éthylène propylène rubber ») n'entrent pas dans le cadre de la définition de polyéthylène mentionnée ci-dessus.

Par « polyéthylène non-réticulé », on entend au sens de la présente invention un polyéthylène qui n'a pas subi de réaction de réticulation. Il ne s'agit donc pas d'un polyéthylène réticulé aussi appelé PER (ou « PEX » en anglais pour « PE crosslinked »). Les polyéthylènes réticulés PER sont obtenus par polymérisation de monomère d'éthylène suivi d'une réaction de réticulation qui peut être une réticulation à l'aide d'un peroxyde (procédé PEX-A), une réticulation par irradiation (procédé PEX-C), une réticulation par silane et d'un catalyseur de réticulation (procédé PEX-B). Bien entendu, le polyéthylène non-réticulé peut subir une étape de réticulation après son incorporation dans une composition de caoutchouc conforme à l'invention, par exemple lors de la cuisson d'un pneumatique comprenant une composition de caoutchouc conforme à l'invention.

Par « polyéthylène non-fonctionnalisé et non-réticulé », on entend un polyéthylène qui n'a pas été modifié après sa polymérisation par greffage d'un groupe fonctionnel comprenant au moins un hétéroatome choisi parmi Si, N, S, O, Cl. Autrement dit le polyéthylène non-fonctionnalisé et non-réticulé consiste essentiellement en un mélange d'atomes de carbone et d'hydrogène et ne comprend pas d'hétéroatomes choisi dans le groupe consiste par Si, N, S, O et Cl. Si ces hétéroatomes sont présents dans le polyéthylène, ils le sont à titre d'impureté.

Préférentiellement, le polyéthylène non-fonctionnalisé et non-réticulé peut être choisi dans le groupe constitué par les polyéthylènes haute densité (« PE-HD » ou aussi « HDPE » pour « high density polyethylene »), les polyéthylènes basse densité (« PE-BD » ou aussi « LDPE » pour «low density polyethylene »), les polyéthylènes basse densité linéaire (« PE-BDL » ou aussi « LLDPE » pour «linear low density polyethylene »), les polyéthylènes moyenne densité (« PE-MD » ou « MDPE » pour « medium density polyethylene »), les polyéthylènes de masse moléculaire très élevée (« PE-UHMW »), les polyéthylènes de très basse densité (« PE-VLD ») et les mélanges de ces polyéthylènes.

Plus préférentiellement encore, le polyéthylène non-fonctionnalisé et non-réticulé est un polyéthylène non-fonctionnalisé et non-réticulé de haute densité.

Préférentiellement, le polyéthylène non-fonctionnalisé et non-réticulé, notamment de haute densité, a une densité comprise dans un domaine allant de 940 à 970 kg/m³, plus préférentiellement dans un domaine allant de 950 à 970 kg/m³. La densité est mesurée à 23°C selon la norme ISO 1183-2019.

Préférentiellement, le polyéthylène non-fonctionnalisé et non-réticulé, notamment de haute densité, a un indice de fluidité à 190°C sous 5 kg compris dans un domaine allant de 2 à 25 g/10 min, de préférence compris dans un domaine allant 10 à 25 g/10 min. L'indice de fluidité à chaud (MFR 190°C/5 Kg) (« MFR » pour « Mass Flow Rate » est mesuré selon la norme ISO 1133-1-2012 à 190°C à travers une filière normalisée sous l'action d'un piston lesté d'une masse de 5 Kg).

Plus préférentiellement encore, le polyéthylène non-fonctionnalisé et non-réticulé, notamment de haute densité, a une densité mesurée à 23°C selon la norme ISO 1183-2019 comprise dans un domaine allant de 940 à 970 kg/m³ et un indice de fluidité à chaud (190°C/5 Kg) mesurée selon la norme ISO 1133-1-2012 compris dans un domaine allant de 2 à 25 g/10 min. De manière encore plus préférée, le polyéthylène non-fonctionnalisé et non-réticulé, notamment de haute densité, a une densité mesurée à 23°C selon la norme ISO 1183-2019 compris dans un domaine allant de 950 à 970 kg/m³ et un indice de fluidité à chaud (190°C/5 Kg) compris dans un domaine allant de 10 à 25 g/10 min.

Préférentiellement, le taux de polyéthylène non-fonctionnalisé et non-réticulé dans la composition de caoutchouc est compris dans un domaine allant de 5 à 70 pce, de préférence allant de 10 à 45 pce.

Le polyéthylène non-fonctionnalisé et non-réticulé utilisable peut être obtenu par les procédés classiques connus comme notamment la polymérisation en présence de catalyseurs métallocènes. A l'issue de la polymérisation, le polyéthylène est granulé sans aucune réaction de réticulation. Les polyéthylènes non-fonctionnalisés et non-réticulés sont disponibles commercialement auprès de fournisseurs tels que Dow Global Technologies, BASF, Silon, ENI ...

Par « polyéthylène fonctionnalisé et non-réticulé », on entend au sens de la présente invention un polyéthylène qui a subi une réaction de modification, après sa polymérisation, de façon à comporter au moins un groupe fonctionnel comprenant au moins un hétéroatome choisi dans le groupe constitué par Si, N, O, S et Cl. La modification ou la fonctionnalisation d'un polyéthylène non-réticulé peut s'effectué par tout moyen connu notamment par greffage de groupement fonctionnel comprenant au moins un hétéroatome. A l'issue de cette réaction, le polyéthylène fonctionnalisé ne subit pas de réaction de réticulation. Les polyéthylènes fonctionnalisés et non-réticulés peuvent être disponibles commercialement auprès de fournisseurs tels que Dow Global Technologies, BASF, Silon, ENI ...

Conviennent particulièrement à titre de groupes fonctionnels ceux comprenant au moins une fonction telle que : le silanol, un alcoxysilane, un atome de chlore.

Préférentiellement, le polyéthylène fonctionnalisé et non réticulé comprend au moins un groupe fonctionnel alcoxysilane. Dans la suite de la description, ce polyéthylène sera désigné l'expression « polyéthylène fonctionnalisé alcoxysilane et non-réticulé » ou par l'expression « polyethylene greffé silane et non-réticulé (en anglais « silane-grafted polyethylene ») » ou par « polyéthylène alcoxysilane et non-réticulé » ; ces trois expressions étant équivalentes et interchangeables.

Le polyéthylène fonctionnalisé alcoxysilane et non-réticulé est obtenu en greffant un composé silane de formule (I) sur le polyéthylène

CH₂=CR-(COO)ₓ(CₙH₂ₙ)ySiR'₃ (I)

dans laquelle:
- R est un atome d'hydrogène ou un groupe méthyle ;
- x, y est un nombre entier égal à 0 ou 1 avec la condition que lorsque x=1 alors y=1
- n est un nombre entier allant de 1 à 12 ; de préférence de 1 à 4 ;
- chaque R', identique ou différent, est un groupe chimique choisi dans le groupe constitué par les groupes alcoxy ayant de 1 à 12 atomes de carbone (par exemple le méthoxy, l'éthoxy, le butoxy), les groupes aryloxy ayant de 6 à 12 atomes de carbone (par exemple le phenoxy), les groupe acyloxy aliphatiques ayant de 1 à 12 atomes de carbone (par exemple formyloxy, acetyloxy, propanoyloxy) les groupes aminé substitués ou non substitués (par exemple alkylamino).

En particulier, les composés de formule (I) préférés peuvent être ceux pour lesquels :
- R est un atome d'hydrogène ou un groupe méthyle ;
- x, y est un nombre entier égal à 0 ou 1 avec la condition que lorsque x=1 alors y=1
- n est un nombre entier allant de 1 à 12 ; de préférence de 1 à 4 ;
- chaque R', identique ou différent, est un groupe alcoxy ayant de 1 à 12 atomes de carbone, de préférence le méthoxy, l'éthoxy, le butoxy.

Le greffage du composé de formule (I) sur le polyéthylène peut s'effectuer par une réaction radicalaire en présence de peroxydes. La réaction de greffage peut s'effectuer dans une extrudeuse. En sortie d'extrudeuse, on obtient un polyéthylène greffé silane et non-réticulé. Un exemple de procédé de greffage est décrit aux paragraphes [0042] à [0048] du document EP2407496A1. Les polyéthylènes greffés silanes et non-réticulés sont disponibles commercialement auprès de fournisseurs tels que Dow Global Technologies, BASF, Silon, ENI ...

Préférentiellement, le polyéthylène fonctionnalisé et non-réticulé, notamment le polyéthylène fonctionnalisé alcoxysilane et non-réticulé, peut être choisi dans le groupe constitué par les polyéthylènes haute densité, les polyéthylènes basse densité, les polyéthylènes basse densité linéaire, les polyéthylènes moyenne densité, les polyéthylènes de masse moléculaire très élevée, les polyéthylènes de très basse densité et les mélanges de ces polyéthylènes.

Plus préférentiellement encore, le polyéthylène fonctionnalisé et non-réticulé, en particulier polyéthylène fonctionnalisé alcoxysilane et non-réticulé, est un polyéthylène de haute densité.

Préférentiellement, le polyéthylène fonctionnalisé et non-réticulé, notamment polyéthylène fonctionnalisé alcoxysilane et non-réticulé, a une densité comprise dans un domaine allant de 940 à 970 kg/m³, plus préférentiellement dans un domaine allant de 940 à 965 kg/m³. La densité est mesurée à 23°C selon la norme ISO 1183-2019.

Préférentiellement, le polyéthylène fonctionnalisé et non-réticulé, notamment le polyéthylène fonctionnalisé alcoxysilane et non-réticulé, a un indice de fluidité à 190°C sous 5 kg compris dans un domaine allant de 2 à 25 g/10 min, de préférence compris dans un domaine allant de 2,5 à 22 g/10 min. L'indice de fluidité à chaud (MFR 190°C/5 Kg) (« MFR » pour « Mass Flow Rate » est mesuré selon la norme ISO 1133-1-2012 à 190°C à travers une filière normalisée sous l'action d'un piston lesté d'une masse de 5 Kg).

Plus préférentiellement encore le polyéthylène fonctionnalisé et non-réticulé, notamment le polyéthylène fonctionnalisé alcoxysilane et non-réticulé, a une densité mesurée à 23°C selon la norme ISO 1183-2019 comprise dans un domaine allant de 940 à 970 kg/m³ et un indice de fluidité à chaud (MFR 190°C/5 Kg) mesuré selon la norme ISO 1133-1-2012 compris dans un domaine allant de 2 à 25 g/10 min. De manière encore plus préférée, sa densité mesurée à 23°C selon la norme ISO 1183-2019 est comprise dans un domaine allant de 940 à 960 kg/m³ et présentant un indice de fluidité à chaud (190°C/5 Kg) compris dans un domaine allant de 2 à 10 g/10 min.

Le taux de polyéthylène fonctionnalisé et non-réticulé, notamment de polyéthylène fonctionnalisé alcoxysilane et non-réticulé, dans la composition de caoutchouc peut être compris dans un domaine allant de 0,5 à 15 pce, de préférence de 1 à 10 pce.

Le taux de polyéthylène non fonctionnalisé et non-réticulé exprimé en pce est supérieur au taux du polyéthylène fonctionnalisé et non-réticulé exprimé en pce, notamment supérieur au taux du polyéthylène fonctionnalisé alcoxysilane et non-réticulé exprimé en pce.

Préférentiellement, le taux total de polyéthylène non-fonctionnalisé et non-réticulé et de polyéthylène fonctionnalisé et non-réticulé, notamment de polyéthylène fonctionnalisé alcoxysilane, est supérieur ou égal à 5,5 pce, de préférence est compris dans un domaine allant de 5,5 à 75 pce.

Préférentiellement, le ratio massique entre le polyéthylène non-réticulé et non-fonctionnalisé et le polyéthylène fonctionnalisé et non-réticulé, notamment polyéthylène fonctionnalisé alcoxysilane, est compris dans un domaine allant de de 2 à 20 ; de préférence dans un domaine allant de 5 à 10.

Préférentiellement, le polyéthylène non-fonctionnalisé et non-réticulé est choisi dans le groupe constitué par les polyéthylènes haute densité, les polyéthylènes basse densité, les polyéthylènes basse densité linéaire, les polyéthylènes moyenne densité, les polyéthylènes de masse moléculaire très élevée, les polyéthylènes de très basse densité et le polyéthylène fonctionnalisé et non-réticulé, polyéthylène fonctionnalisé alcoxysilane, est un polyéthylène de haute densité.

Préférentiellement, le polyéthylène non-fonctionnalisé et non-réticulé est un polyéthylène de haute densité et le polyéthylène fonctionnalisé et non-réticulé, notamment le polyéthylène fonctionnalisé alcoxysilane, est choisi dans le groupe constitué par les polyéthylènes haute densité, les polyéthylènes basse densité, les polyéthylènes basse densité linéaire, les polyéthylènes moyenne densité, les polyéthylènes de masse moléculaire très élevée, les polyéthylènes de très basse densité et les mélanges de ces polyéthylènes.

Préférentiellement, le polyéthylène non-fonctionnalisé et non-réticulé et le polyéthylène fonctionnalisé et non-réticulé, notamment le polyéthylène fonctionnalisé alcoxysilane, sont des polyéthylènes de haute densité.

Plus préférentiellement encore, le polyéthylène non-fonctionnalisé et non-réticulé a une densité mesurée à 23°C selon la norme ISO 1183-2019 compris dans un domaine allant de 950 à 970 kg/m³ et un indice de fluidité à chaud (190°C/5 Kg) compris dans un domaine allant de 10 à 25 g/10 min et le polyéthylène fonctionnalisé et non-réticulé , notamment le polyéthylène fonctionnalisé alcoxysilane, a une densité mesurée à 23°C selon la norme ISO 1183-2019 comprise dans un domaine allant de 940 à 960 kg/m³ et a un indice de fluidité à chaud (190°C/5 Kg) compris dans un domaine allant de 2 à 10 g/10 min.

La composition de caoutchouc de l'invention peut optionnellement comprendre une ou plusieurs charges renforçantes. Le taux de la charge renforçante est compris dans un domaine allant de 0 à 15 pce.

On peut utiliser tout type de charge dite renforçante, connue pour ses capacités à renforcer une composition de caoutchouc utilisable notamment pour la fabrication de pneumatiques, par exemple une charge organique telle que du noir de carbone, une charge inorganique telle que de la silice ou encore un mélange de ces deux types de charges.

Préférentiellement, lorsqu'elle est présente la charge renforçante est choisie dans le groupe constitué par le noir de carbone, la silice et leur mélange. Lors que la charge renforçante comprend un mélange de charge renforçante, son taux dans la composition n'excède pas 15 pce, de préférence, 13 pce, plus préférentiellement 12 pce.

Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO97/36724-A2 ou WO99/16600-A1).

Par « charge inorganique renforçante », doit être entendu ici toute charge inorganique ou minérale, quelles que soient sa couleur et son origine (naturelle ou de synthèse), encore appelée charge « blanche », charge « claire » ou même charge « non-noire » par opposition au noir de carbone, capable de renforcer à elle seule, sans autre moyen qu'un agent de couplage intermédiaire, une composition de caoutchouc destinée à la fabrication de pneumatiques. De manière connue, certaines charges inorganiques renforçantes peuvent se caractériser notamment par la présence de groupes hydroxyle (-OH) à leur surface.

Comme charges inorganiques renforçantes conviennent notamment des charges minérales du type siliceux, préférentiellement la silice (SiO₂) ou du type alumineux, en particulier l'alumine (Al₂O₃).

La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 m²/g, de préférence comprises dans un domaine allant de 30 à 400 m²/g, notamment de 60 à 300 m²/g. Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17]. Pour les charges inorganiques telles que la silice par exemple, les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ^{®} 5000GR », « Ultrasil ^{®} 7000GR » de la société Evonik, les silices « Zeosil ^{®} 1085GR», « Zeosil^{®} 1115 MP », « Zeosil^{®} 1165MP », « Zeosil^{®} Premium 200MP », « Zeosil^{®} HRS 1200 MP » de la Société Solvay. À titre de silice non HDS, les silices commerciales suivantes peuvent être utilisées : les silices « Ultrasil ^{®} VN2GR », « Ultrasil ^{®} VN3GR » de la société Evonik, la silice « Zeosil^{®} 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

L'état physique sous lequel se présente la charge inorganique renforçante est indifférent, que ce soit sous forme de poudre, de microperles, de granulés, ou encore de billes ou toute autre forme densifiée appropriée. Bien entendu on entend également par charge inorganique renforçante des mélanges de différentes charges inorganiques renforçantes, en particulier de silices telles que décrites ci-dessus.

Pour coupler la charge inorganique renforçante à l'élastomère diénique, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, le dit second groupe fonctionnel étant apte à interagir avec l'élastomère diénique. Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle)commercialisé par la société Momentive sous la dénomination « NXT Silane ». Plus préférentiellement, l'organosilane est un organosilane polysulfuré.

Plus préférentiellement, dans la composition de caoutchouc de l'invention, le taux de charge renforçante est compris dans un domaine allant de 0 à 13 pce, plus préférentiellement encore de 0 à 12 pce.

La composition de caoutchouc comprend au moins un système de réticulation.

Le système de réticulation peut être tout type de système connu de l'homme de l'art dans le domaine des compositions de caoutchouc pour pneumatique. Il peut notamment être à base de soufre, et/ou de peroxyde et/ou de bismaléimides.
Selon un mode de réalisation de la composition de caoutchouc de l'invention, le système de réticulation est à base de soufre, on parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels que l'oxyde de zinc, l'acide stéarique ou tout composé équivalent tels que les sels d'acide stéarique et sels de métaux de transition, les dérivés guanidiques (en particulier diphénylguanidine), ou encore des retardateurs de vulcanisation connus.

Le soufre est utilisé à un taux préférentiel compris entre 0,5 et 12 pce, en particulier entre 1 et 10 pce. L'accélérateur de vulcanisation est utilisé à un taux préférentiel compris entre 0,5 et 10 pce, plus préférentiellement compris entre 0,5 et 5,0 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé « MBTS »), N-cyclohexyl-2-benzothiazyle sulfénamide (« CBS »), N,N-dicyclohexyl-2-benzothiazyle sulfénamide (« DCBS »), N-ter-butyl-2-benzothiazyle sulfénamide (« TBBS »), N-ter-butyl-2-benzothiazyle sulfénimide (« TBSI »), disulfure de tétrabenzylthiurame (« TBZTD »), dibenzyldithiocarbamate de zinc (« ZBEC ») et les mélanges de ces composés.

Selon un autre mode de réalisation de la composition de l'invention, le système de réticulation est un système à base de peroxydes. Le peroxyde utilisable selon l'invention peut être tout peroxyde connu de l'homme de l'art. De manière préférée, le peroxyde est choisi parmi les peroxydes organiques.

Par « peroxyde organique », on entend un composé organique, c'est-à-dire contenant du carbone, comportant un groupe -O-O- (deux atomes d'oxygène liés par une liaison covalente simple).

Préférentiellement, le peroxyde organique est choisi dans le groupe constitué par les peroxydes de dialkyle, les monoperoxycarbonates, les peroxydes de diacyle, les peroxycétales, les peroxyesters et leurs mélanges.

De préférence, les peroxydes de dialkyle sont choisis dans le groupe constitué par le peroxyde de dicumyle, le peroxyde de di-t-butyle, peroxyde de t-butylcumyle , le 2,5-diméthyl-2,5-di(t-butylperoxy)hexane , le 2,5-diméthyl-2,5-di(t-amylperoxy)-hexane, le 2,5-diméthyl-2,5-di(t-butylperoxy)hexyne-3, le 2,5-diméthyl-2,5-di(t-amylperoxy)hexyne-3, α,α'-di-[(t-butyl-peroxy)isopropyl] benzène, le α,α'-di-[(t-amyl-peroxy)isopropyl] benzène, le peroxyde de di-t-amyle , le 1,3,5-tri-[(t-butylperoxy)isopropyl]benzène, le 1,3-diméthyl-3-(t-butylperoxy)butanol, le 1,3-diméthyl-3-(t-amylperoxy) butanol et leurs mélanges.

Certains monoperoxycarbonates tels que le OO-tert-butyl-O-(2-éthylhexyl) monoperoxycarbonate, le OO-tert-butyl-O-isopropyl monoperoxycarbonate, le OO-tert-amyl-O-2-éthyl hexyl monoperoxycarbonate et leurs mélanges, peuvent également être utilisés.

Parmi les peroxydes de diacyles, le peroxyde préféré est le peroxyde de benzoyle.

Parmi les peroxycétales, les peroxydes préférés sont choisis dans le groupe constitué par le 1,1-di-(t-butylperoxy)-3,3,5-triméthylcyclohexane, le 4,4-di-(t-butylperoxy)valérate de n-butyle, le 3,3-di-(t-butylperoxy)butyrate d'éthyle, le 2,2-di-(t-amylperoxy)-propane, le 3,6,9-triethyl-3,6,9-trimethyl-1,4,7-triperoxynonane (ou peroxyde de méthyl éthyl cétone trimère cyclique), le 3,3,5,7,7-pentamethyl-1,2,4-trioxepane, le 4,4-bis(t-amylperoxy)valérate de n-butyle, le 3,3-di(t-amylperoxy)butyrate d'éthyle, le 1,1-di(t-butylperoxy)cyclohexane, le 1,1-di(t-amylperoxy)cyclohexane et leurs mélanges.

De préférence, les peroxyesters sont choisis dans le groupe constitué par le tert-butylperoxybenzoate, le tert-butyleperoxy-2-ethylhexanoate, le tert-butyleperoxy-3,5,5-triméthylehexanoate et leurs mélanges.

De manière particulièrement préférée, le peroxyde organique est choisi dans le groupe constitué par le peroxyde de dicumyle, les peroxydes d'aryle ou de diaryle, le peroxyde de diacétyle, le peroxyde de benzoyle, le peroxyde de dibenzoyle, le peroxyde de ditertbutyle, le peroxyde de tertbutylcumyle, le 2,5-bis (tertbutylperoxy)-2,5-diméthylhexane, le n-butyl-4,4'-di(tert-butylperoxy) valérate, le OO-(t-butyl)-O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzène et les mélanges de ces derniers, encore préférentiellement dans le groupe consistant en le peroxyde de dicumyle, le n-butyl-4,4'-di(tert-butylperoxy)-valérate, le OO-(t-butyl) O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzène et les mélanges de ces derniers.

Préférentiellement, le taux total de peroxyde dans la composition peut être supérieur ou égal à 0,25 pce, plus préférentiellement supérieur ou égal à 0,5 pce, de préférence compris dans un domaine allant de 0,25 à 10 pce, en particulier de 0,5 à 5 pce, par exemple de 1 à 5 pce.

Les compositions de caoutchouc conformes à l'invention peuvent comporter également tout ou partie des additifs et agents de mise en œuvre usuels, connus de l'homme de l'art et habituellement utilisés dans les compositions de caoutchouc destinées notamment à la fabrication de pneumatiques, en particulier pour des couches internes, comme par exemple des plastifiants (tels que des huiles plastifiantes et/ou des résines plastifiantes), des charges (autres que celles précitées), des pigments, des agents de protection tels que cires anti-ozone, anti-ozonants chimiques, antioxydants, des agents anti-fatigue, des résines renforçantes (telles que décrites par exemple dans la demande WO 02/10269).

La composition de caoutchouc conforme à l'invention peut être fabriquée dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type « Banbury »), tous les constituants nécessaires, notamment la matrice élastomérique, le polyéthylène non-fonctionnalisé et non-réticulé, le polyéthylène fonctionnalisé et non-réticulé, notamment le polyéthylène fonctionnalisé alcoxysilane, , la charge renforçante si elle est présente, les éventuels autres additifs divers, à l'exception du système de réticulation. L'incorporation de la charge renforçante à l'élastomère diénique peut être réalisée en une ou plusieurs fois en malaxant thermomécaniquement. La phase non-productive peut être réalisée à haute température, jusqu'à une température maximale comprise entre 140°C et 200°C, de préférence entre 140°C et 185°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C. On incorpore alors le système de réticulation, et le tout est alors mélangé pendant quelques minutes, par exemple entre 5 et 15 min.

La composition finale ainsi obtenue peut être ensuite calandrée par exemple sous la forme d'une feuille ou d'une plaque, notamment pour une caractérisation au laboratoire, ou encore extrudée sous la forme d'un semi-fini (ou profilé) de caoutchouc utilisable par exemple comme une couche interne de pneumatique.

La composition peut être soit à l'état cru (avant réticulation ou vulcanisation), soit à l'état cuit (après réticulation ou vulcanisation), peut être un produit semi-fini qui peut être utilisé dans un pneumatique.

La réticulation de la composition peut être conduite de manière connue de l'homme du métier, par exemple à une température comprise entre 130°C et 200°C, sous pression.

### Pneumatique

Un autre objet de la présente invention concerne un pneumatique comportant au moins une couche comprenant une composition de caoutchouc telle que définie ci-dessus.

Préférentiellement, la composition constitue une couche interne du pneumatique. De préférence, cette couche est localisée dans la zone du bourrelet du pneumatique.

Il est possible au sein du pneumatique de définir trois types de zones :
- la zone radialement extérieure et en contact avec l'air ambiant, cette zone étant essentiellement constituée de la bande de roulement et du flanc externe du pneumatique. Un flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet,
- la zone radialement intérieure et en contact avez le gaz de gonflage, cette zone étant généralement constituée par la couche étance au gaz de gonflage, parfois appelée gomme intérieur (« inner liner » en anglais),
- la zone interne du pneumatique, c'est-à-dire celle comprise entre les zones extérieures et intérieures. Cette zone inclut des couches ou des nappes qui sont appelées ici couches internes du pneumatique.

Les couches internes selon la présente invention sont donc celles comprises dans la zone interne du pneumatique, c'est-à-dire celles comprises entre les zones extérieures et intérieure. Ces couches internes sont sans contact direct ni avec l'air ambiant, ni avec le gaz de gonflage, elles peuvent donc être n'importe quelle couche de pneumatique sauf celles qui sont radialement extérieures ou radialement intérieures au pneumatique. Elles peuvent être par exemples une sous-couche de la bande de roulement, une couche du sommet du pneumatique, une nappe carcasse, une couche de la zone basse du pneumatique ou toute autre couche qui n'est pas en contact avec l'air ambiant ou le gaz de gonflage du pneumatique.

### Exemples :

### Essai A :

L'exemple présenté dans le tableau 1 a pour but de comparer les différentes propriétés de caoutchouterie de la composition C1 conforme à l'invention à une composition témoin T1 classiquement utilisée dans les couches internes pour les zones du bourrelet d'un pneumatique. Les résultats sont présentés dans le tableau 2.

Les taux des différents constituants des compositions C1 et T1 du tableau 1 sont exprimés en pce. Le noir de carbone et l'ensemble des polyéthylènes non-réticulés sont présents à la même fraction volumique, soit 20 % en volume.

**[Table 1]**

| | T1 | T2 | C1 |
|---|---|---|---|
| Élastomère (1) | 100 | 100 | 100 |
| Noir de carbone (2) | 40 | (-) | (-) |
| Polyéthylène non-fonctionnalisé et non-réticulé (3) | (-) | (-) | 32 |
| Polyéthylène fonctionnalisé et non-réticulé (4) | (-) | 34 | 6,4 |
| Acide Stéarique (5) | 2 | 2 | 2 |
| ZnO (6) | 3 | 3 | 3 |
| Anti-oxydant (7) | 2 | 2 | 2 |
| Soufre | 1 | 1 | 1 |

| | | | |
|---|---|---|---|
| (1) Caoutchouc naturel ; (2) Noir de carbone de grade ASTM N234 (ASTM D1765-2017) commercialisé par la société « Cabot » ; (3) Polyéthylène non-fonctionnalisé et non-réticulé : Polyéthylène de haute densité HDPE « MP90 U » commercialisé par la société « ENI versalis ». Densité = 0,960 g /cm³ mesurée selon la norme ISO 1183-2019. Indice de fluidité à chaud (MFR) = 20 g/10 min mesuré à 190°C sous l'action d'un piston lesté d'une masse de 5 kg conformément à la norme ISO 1133-1-2012 ; (4) : Polyéthylène fonctionnalisé et non-réticulé : polyéthylène non réticulé HDPE greffé avec un triméthoxysilane commercialisé par la société « silon » sous la référence Taborex « TA1108 HD » Densité = 0,943 g /cm³ mesurée selon la norme ISO 1183-2019. Indice de fluidité à chaud (MFR) = 2,7 g/10 min mesuré à 190°C sous l'action d'un piston lesté d'une masse de 5 kg conformément à la norme ISO1133-1-2012 ; (5) Stéarine « Pristerene 4031 » commercialisée par la société « Uniquema » ; (6) Oxyde de Zinc (grade industriel) commercialisé par la société « Umicore » ; (7) N-cyclohexyl-2-benzothiazyl-sulfénamide commercialisé par « Flexys » sous la référence « Santocure CBS ». | | | |

Les compositions T1 et T2 non conformes et la composition C1 conforme à l'invention sont réalisées de la manière suivante :
On introduit dans un mélangeur interne « Polylab » de 414 cm³, rempli à 70 % en volume et dont la température initiale de cuve est d'environ 110°C, l'élastomère diénique, puis le noir de carbone ou les polyéthylènes non-réticulés, dont l'un fonctionnalisé et l'autre non fonctionnalisé, et les autres ingrédients à l'exception du système de réticulation.

On conduit alors un travail thermomécanique (phase non-productive) en une étape, qui dure au total 6 minutes, jusqu'à atteindre une température maximale de tombée de 160°C.

On récupère le mélange ainsi obtenu, on le refroidit, puis on ajoute le système de réticulation (sur un mélangeur externe (homo-finisseur) à 25°C, en mélangeant l'ensemble (phase productive) pendant environs 5 à 6 minutes.

Les compositions ainsi obtenues sont ensuite calandrées sous la forme de plaques (épaisseur de 2 à 3 mm) pour la mesure de leurs propriétés physiques ou mécaniques. Les propriétés de caoutchouterie de ces compositions sont mesurées après cuisson à 150°C pendant 30 min. Les résultats obtenus sont portés dans le tableau 2.

**[Table 2]**

| | T1 | T2 | C1 |
|---|---|---|---|
| G*_{50% retour à 60°C} | 100 | 172 | 229 |
| Tan (δ)_{max à 60°C} | 100 | 70 | 76 |

On constate, de manière surprenante, que lorsque la charge renforçante (le noir de carbone) est remplacée par un mélange spécifique de polyéthylènes non-réticulés, dont l'un fonctionnalisé et l'autre non-fonctionnalisé, pour obtenir la composition C1 selon l'invention, cette composition présente une diminution significative de l'hystérèse (Tan (δ)_{max à 60°C}) et une augmentation de la rigidité (G*_{50% retour à 60°C}). Le compromis rigidité/hystérèse est donc amélioré de la composition conforme à l'invention par rapport aux compositions de caoutchouc de l'art antérieur.

## Revendications

1. Composition de caoutchouc à base d'une matrice élastomérique comprenant majoritairement au moins un élastomère diénique, d'un polyéthylène non-fonctionnalisé et non-réticulé, d'un polyéthylène fonctionnalisé et non-réticulé, d'une charge renforçante dont le taux est compris dans un domaine allant de 0 à 15 pce et d'un système de réticulation, le polyéthylène fonctionnalisé et non-réticulé comportant au moins un groupe fonctionnel comprenant au moins un hétéroatome choisi dans le groupe constitué par Si, N, O, S et CI, le taux de polyéthylène non-fonctionnalisé et non-réticulé exprimé en pce étant supérieur au taux du polyéthylène fonctionnalisé et non-réticulé exprimé en pce.

2. Composition de caoutchouc selon la revendication 1, dans laquelle l'élastomère diénique est un élastomère isoprénique.

3. Composition de caoutchouc selon l'une quelconque des revendications précédentes, dans laquelle le polyéthylène non-fonctionnalisé et non-réticulé est choisi dans le groupe constitué par les polyéthylènes haute densité, les polyéthylènes basse densité, les polyéthylènes basses densité linéaire, les polyéthylènes moyenne densité, les polyéthylènes de masse moléculaire très élevée, les polyéthylènes de très basse densité et les mélanges de ces polyéthylènes.

4. Composition de caoutchouc selon l'une quelconque des revendications précédentes, dans laquelle le polyéthylène non-fonctionnalisé et non-réticulé est un polyéthylène haute densité.

5. Composition de caoutchouc selon l'une quelconque des revendications précédentes, dans laquelle le polyéthylène non-réticulé et non-fonctionnalisé a une densité comprise dans un domaine allant de 940 à 970 kg/m³, plus préférentiellement dans un domaine allant de 950 à 970 kg/m³.

6. Composition de caoutchouc selon l'une quelconque des revendications précédentes, dans laquelle le polyéthylène non-réticulé et non-fonctionnalisé a un indice de fluidité à 190°C sous 5 kg compris dans un domaine allant de 2 à 25 g/10 min, de préférence compris dans un domaine allant de 10 à 25 g/10 min.

7. Composition de caoutchouc selon l'une quelconque des revendications précédentes, dans laquelle le polyéthylène fonctionnalisé et non-réticulé comprend au moins un groupe fonctionnel alcoxysilane.

8. Composition de caoutchouc selon l'une quelconque des revendications précédentes, dans laquelle le polyéthylène fonctionnalisé et non-réticulé est choisi dans le groupe constitué par les polyéthylènes haute densité, les polyéthylènes basse densité, les polyéthylènes basse densité linéaire, les polyéthylènes moyenne densité, les polyéthylènes de masse moléculaire très élevée, les polyéthylènes de très basse densité et les mélanges de ces polyéthylènes.

9. Composition de caoutchouc selon l'une quelconque des revendications précédentes, dans laquelle le polyéthylène fonctionnalisé et non-réticulé a une densité comprise dans un domaine allant de 940 à 970 kg/m³, plus préférentiellement dans un domaine allant de 940 à 960 kg/m³.

10. Composition de caoutchouc selon l'une quelconque des revendications précédentes, dans laquelle le polyéthylène fonctionnalisé et non-réticulé a un indice de fluidité à 190°C sous 5 kg compris dans un domaine allant de 2 à 25 g/10 min, de préférence compris dans un domaine allant de 2 à 10 g/10 min.

11. Composition de caoutchouc selon l'une quelconque des revendications précédentes comprenant une charge renforçante dont le taux est compris dans un domaine allant de 0 à 13 pce, de préférence de 0 à 12 pce.

12. Pneumatique comportant au moins une couche comprenant au moins une composition de caoutchouc définie selon l'une quelconque des revendications 1 à 11.

13. Pneumatique selon la revendication 12, dans lequel ladite composition constitue une couche interne du pneumatique.

14. Pneumatique selon la revendication 13, dans lequel la couche se situe dans la zone du bourrelet du pneumatique.

## Patentansprüche

1. Kautschukzusammensetzung auf Basis einer Elastomermatrix, die hauptsächlich mindestens ein Dienelastomer umfasst, eines nicht funktionalisierten und nicht vernetzten Polyethylens, eines funktionalisierten und nicht vernetzten Polyethylens, eines verstärkenden Füllstoffs, dessen Gehalt in einem Bereich von 0 bis 15 phe liegt, und eines Vernetzungssystems, wobei das funktionalisierte und nicht vernetzte Polyethylen mindestens eine funktionelle Gruppe umfasst, die mindestens ein Heteroatom umfasst, das aus der Gruppe bestehend aus Si, N, O, S und Cl ausgewählt ist, wobei der Gehalt an nicht funktionalisiertem und nicht vernetztem Polyethylen, ausgedrückt in phe, größer ist als der Gehalt an funktionalisiertem und nicht vernetztem Polyethylen, ausgedrückt in phe.

2. Kautschukzusammensetzung nach Anspruch 1, wobei es sich bei dem Dienelastomer um ein Isoprenelastomer handelt.

3. Kautschukzusammensetzung nach einem der vorhergehenden Ansprüche, wobei das nicht funktionalisierte und nicht vernetzte Polyethylen aus der Gruppe bestehend aus Polyethylenen hoher Dichte, Polyethylenen niedriger Dichte, linearen Polyethylenen niedriger Dichte, Polyethylenen mittlerer Dichte, Polyethylenen mit ultrahohem Molekulargewicht, Polyethylen sehr niedriger Dichte und Mischungen dieser Polyethylene ausgewählt ist.

4. Kautschukzusammensetzung nach einem der vorhergehenden Ansprüche, wobei es sich bei dem nicht funktionalisierten und nicht vernetzten Polyethylen um ein Polyethylen hoher Dichte handelt.

5. Kautschukzusammensetzung nach einem der vorhergehenden Ansprüche, wobei das nicht vernetzte und nicht funktionalisierte Polyethylen eine Dichte im Bereich von 940 bis 970 kg/m³, weiter bevorzugt in einem Bereich von 950 bis 970 kg/m³, aufweist.

6. Kautschukzusammensetzung nach einem der vorhergehenden Ansprüche, wobei das nicht vernetzte und nicht funktionalisierte Polyethylen einen Schmelzindex bei 190 °C unter 5 kg in einem Bereich von 2 bis 25 g/10 min, vorzugsweise in einem Bereich von 10 bis 25 g/10 min, aufweist.

7. Kautschukzusammensetzung nach einem der vorhergehenden Ansprüche, bei der das funktionalisierte und nicht vernetzte Polyethylen mindestens eine funktionelle Alkoxysilangruppe umfasst.

8. Kautschukzusammensetzung nach einem der vorhergehenden Ansprüche, wobei das funktionalisierte und nicht vernetzte Polyethylen aus der Gruppe bestehend aus Polyethylenen hoher Dichte, Polyethylenen niedriger Dichte, linearen Polyethylenen niedriger Dichte, Polyethylenen mittlerer Dichte, Polyethylenen mit ultrahohem Molekulargewicht, Polyethylen sehr niedriger Dichte und Mischungen dieser Polyethylene ausgewählt ist.

9. Kautschukzusammensetzung nach einem der vorhergehenden Ansprüche, wobei das funktionalisierte und nicht vernetzte Polyethylen eine Dichte im Bereich von 940 bis 970 kg/m³, weiter bevorzugt in einem Bereich von 940 bis 960 kg/m³, aufweist.

10. Kautschukzusammensetzung nach einem der vorhergehenden Ansprüche, wobei das funktionalisierte und nicht vernetzte Polyethylen einen Schmelzindex bei 190 °C unter 5 kg in einem Bereich von 2 bis 25 g/10 min, vorzugsweise in einem Bereich von 2 bis 10 g/10 min, aufweist.

11. Kautschukzusammensetzung nach einem der vorhergehenden Ansprüche, die einen verstärkenden Füllstoff umfasst, dessen Gehalt in einem Bereich von 0 bis 13 phe, vorzugsweise 0 bis 12 phe, liegt.

12. Reifen mit mindestens einer Schicht, die mindestens eine Kautschukzusammensetzung gemäß einem der Ansprüche 1 bis 11 umfasst.

13. Reifen nach Anspruch 12, wobei die Zusammensetzung eine Innenschicht des Reifens bildet.

14. Reifen nach Anspruch 13, wobei sich die Schicht im Wulstbereich des Reifens befindet.

## Claims

1. Rubber composition based on an elastomeric matrix comprising predominantly at least one diene elastomer, an unfunctionalized and non-crosslinked polyethylene, a functionalized and non-crosslinked polyethylene, a reinforcing filler in an amount ranging from 0 to 15 phr, and a crosslinking system, the functionalized and non-crosslinked polyethylene comprising at least one functional group comprising at least one heteroatom selected from the group consisting of Si, N, O, S and Cl, the content of unfunctionalized and non-crosslinked polyethylene expressed in phr being higher than the content of functionalized and non-crosslinked polyethylene expressed in phr.

2. Rubber composition according to claim 1, wherein the diene elastomer is an isoprene elastomer.

3. Rubber composition according to any one of the preceding claims, wherein the unfunctionalized and non-crosslinked polyethylene is selected from the group consisting of high-density polyethylenes, low-density polyethylenes, linear low-density polyethylenes, medium-density polyethylenes, very high molecular weight polyethylenes, very-low-density polyethylenes, and mixtures thereof.

4. Rubber composition according to any one of the preceding claims, wherein the unfunctionalized and non-crosslinked polyethylene is a high-density polyethylene.

5. Rubber composition according to any one of the preceding claims, wherein the unfunctionalized and non-crosslinked polyethylene has a density ranging from 940 to 970 kg/m³, more preferentially from 950 to 970 kg/m³.

6. Rubber composition according to any one of the preceding claims, wherein the unfunctionalized and non-crosslinked polyethylene has a melt flow index at 190°C under 5 kg ranging from 2 to 25 g/10 min, preferably from 10 to 25 g/10 min.

7. Rubber composition according to any one of the preceding claims, wherein the functionalized and non-crosslinked polyethylene comprises at least one alkoxysilane functional group.

8. Rubber composition according to any one of the preceding claims, wherein the functionalized and non-crosslinked polyethylene is selected from the group consisting of high-density polyethylenes, low-density polyethylenes, linear low-density polyethylenes, medium-density polyethylenes, very high molecular weight polyethylenes, very-low-density polyethylenes, and mixtures thereof.

9. Rubber composition according to any one of the preceding claims, wherein the functionalized and non-crosslinked polyethylene has a density ranging from 940 to 970 kg/m³, more preferentially from 940 to 960 kg/m³.

10. Rubber composition according to any one of the preceding claims, wherein the functionalized and non-crosslinked polyethylene has a melt flow index at 190°C under 5 kg ranging from 2 to 25 g/10 min, preferably from 2 to 10 g/10 min.

11. Rubber composition according to any one of the preceding claims comprising a reinforcing filler in an amount ranging from 0 to 13 phr, preferably from 0 to 12 phr.

12. Tire comprising at least one layer comprising at least one rubber composition as defined according to any one of claims 1 to 11.

13. Tire according to claim 12, wherein said composition constitutes an inner layer of the tire.

14. Tire according to claim 13, wherein the layer is located in the bead zone of the tire.
